# EUROPEAN PATENT APPLICATION

(11) **EP 4 764 844 A1**
(43) Date of publication of application: **24.06.2026**
(21) Application number: 24221905.3
(22) Date of filing: 19.12.2024
(51) Int. Cl.: G06F 9/38, G06F 9/30

(54) **PROGRAMMABLE PROCESSING UNIT FOR EXECUTING INSTRUCTIONS INVOLVING VECTOR OPERATIONS**

(71) Applicant: Imec VZW, 3001 Leuven (BE)
(72) Inventor: KASGEN, Philipp, 3001 Heverlee (BE); SENGUPTA, Sourav, 3000 Leuven (BE); MEJDRICH, Eric, 3001 Heverlee (BE); BHATTACHARJEE, Debjyoti, 3000 Leuven (BE); HABER, Tom, 3560 Lummen (BE); SVEDAS, Jonas, Cambridge, CB1 8HD (GB); PERUMKUNNIL, Manu Komalan, 3050 Oud Heverlee (BE)
(74) Representative: EIP

(57) **Abstract**

A programmable processing unit, method of operating a processing unit, and a computer-readable storage medium are provided. The programmable processing unit comprises a plurality of vector portions, providing registers and vector operation units, and a controller. The controller comprises control logic configured to obtain an instruction involving vector operations and invoke a plurality of threads to execute the instruction on respective vector input data. At least one of the plurality of threads executes a vector operation on respective vector input data using the plurality of vector portions.

## Description

### Technical Field

The present invention relates to a programmable processing unit for executing instructions using multiple threads.

### Background

Programmable processing units are typically electronic circuit devices that execute instructions provided by software programs. Processing units execute instructions by interpreting and acting upon commands stored in memory, using a structured framework. Examples include Central Processing Units (CPUs), Graphics Processing Units (GPUs), and Digital Signal Processors (DSPs). These different types of programmable processing units typically have different architectures and design goals, and are optimized for different tasks. The architecture of a processing unit relates to how different layers of the processing unit are implemented, including the Instruction Set Architecture (ISA), microarchitecture, and hardware configuration.

The ISA is an abstract interface between software and hardware for a processing unit. The ISA typically defines the set of operations the processor can perform (e.g. ADD, LOAD, JUMP), supported data formats (e.g. integers, floating-point numbers), storage for immediate operands and intermediate results (e.g. registers), and memory access, including how data is loaded and stored.

The microarchitecture of a processing unit refers to the internal design and implementation of a processing unit that executes the ISA. The microarchitecture typically establishes execution pipelines, cache hierarchy, branch prediction, the number and design of functional units, and out-of-order execution. The microarchitecture is used to optimize performance and power efficiency when implementing the ISA. A single ISA may be implemented using different microarchitectures.

The hardware configuration refers to the specific physical setup and capabilities of a processing unit including the number of processor cores and their clock speeds, the amounts and types of memory, circuit layouts and interconnects (e.g. buses). Registers are small and fast storage locations within processors that are used to temporarily store data that is being processed using operation units such as Arithmetic Logic Units (ALUs) and Floating Point Units (FPUs).

Registers typically have an architected size, or bit width, which defines the size of the largest data element that can fit into a single register. Typical register bit widths include 64-bit and 128-bit. Data types that have a bit width that matches the architected bit width of a register, for example 64-bit integers, are referred to as native data types. Smaller data types, for example 8-bit integer and 8-bit floating point, are referred to as non-native data types.

Programmable processing units are typically used to execute a variety of workloads that have varying characteristics. Optimizing the use of processor resources such as registers and operation units is desirable, but challenging in the face of the varying characteristics of workloads that these processing units are expected to execute.

### Summary

According to a first aspect, there is provided a programmable processing unit comprising a plurality of vector portions, each of the plurality of vector portions providing a vector data path and a register for storing vector data, each vector data path comprising a vector operation unit for performing vector operations on vector data; and a controller comprising control logic configured to: obtain an instruction involving vector operations; and invoke a plurality of threads to execute the instruction, wherein each of the plurality of threads is associated with respective input vector data and the control logic configured at least one of the plurality of threads to execute a vector operation on respective input vector data using the plurality of vector portions.

By configuring threads in a SIMT execution model to perform vector operations, or SIMD instructions, it becomes possible to increase the efficiency of register use and computational throughput. Workloads which rely on non-native short data types typically suffer from inefficient register access and memory bandwidth usage. Integrating SIMD for non-native shorter data types within threads of a SIMT execution model enables more of the registers' architected bits to be used for each operation. This model also increases the number of operations that can be performed in parallel for each SIMT thread, providing design choices to obtain greater computational throughput without significantly increasing hardware resources or processor area.

Providing SIMD operations in SIMT threads may result in increased control logic complexity, instruction size, and complexity in order to align and perform vector operations, but this increased complexity is outweighed by the more efficient register use and increased computational throughput. In particular, for workloads which process large volumes of non-native shorter data types, such as 4-bit, 8-bit, and 16-bit integers and floating point values, the implementation of SIMD inside SIMT threads greatly increases the computational throughput. As such, the programmable processing unit may be provided with greater computational throughput and efficiency when executing workloads such as machine learning, image processing, and graphics rendering. The programmable processing unit may achieve this while still being capable of handling other workloads on larger, and native, data types because the hardware in the processing unit does not need to be specifically reconfigured or redesigned to optimize for increased parallelism for these shorter data types.

The vector data associated with a given thread may comprise packed scalar data. For example, the given thread may be configured to perform a vector operation on a plurality of scalar data values simultaneously. In this case, the plurality of scalar data values may be packed onto a single register such that a single vector operation can be used to operate on all of the scalar data values simultaneously using a single operation unit. This enables the programmable processing unit to use more of the architected bits in the register files and perform more operations simultaneously, thereby making more efficient use of the memory bandwidth and reducing register pressure.

Two or more of the threads may be configured to use a common vector portion. In this case, the control logic is configured to control an order in which the two or more threads use the common vector portion. By controlling the order in which a common vector portion is used by two or more threads, it becomes possible to implement packed scalar data operations in these threads without increasing the number of vector portions provided in the programmable processing unit.

A first register of a first vector portion may have a first register bit width and respective input vector data for a given thread may comprise a plurality of scalar data values, each scalar data value having a data bit width that is smaller than the register bit width. In this case, the control logic may cause the given thread to load two or more scalar data values of the respective input data onto the first register. The vector operation for the given thread may then be executed on the two or more scalar data values using a first vector operation unit of the first vector portion.

In this way, the programmable processing unit is able to simultaneously operate on a plurality of scalar data values in a single thread. This increases the parallelism of the execution of the instruction while maintaining the flexibility and divergence capabilities of SIMT execution models.

A sum of the data bit widths of the respective input vector data may exceed the register bit width. In this case, the given thread may be configured to execute two lanes. A first lane is executed by loading a first set of two or more scalar data values of the respective input vector data onto a first register of a first vector portion and executing the vector operation on the first set of two or more scalar data values using the first vector operation unit of the first vector portion. A second lane is executed by loading a second set of two or more scalar data values of the respective input vector data onto a second register of a second vector portion and executing the vector operation on the second set of two or more scalar data values using a second vector operation unit of the second vector portion.

This allows a single thread to operate on a larger volume of vector data simultaneously by dividing the vector operations across a plurality of vector portions. A programmable processing unit may comprise a large number of vector portions, allowing a single thread to operate on a large volume of input vector data simultaneously.

A first thread of the plurality of threads may execute a first vector operation using a first subset of the plurality of vector portions and a second thread of the plurality of threads may execute a second vector operation using a second subset of the plurality of vector portions. The first and second subsets may be different. In this way, the instruction may be distributed for execution across the plurality of vector portions using multiple threads. The first subset and the second subset may be mutually exclusive such that the first and second thread can execute in parallel in using different vector portions. In other examples, the first subset and the second subset may share one or more common vector portions. In this case, the use of mutually exclusive vector portions may proceed in parallel, while the one or more shared vector portions may be used by the first and second thread at different times.

The plurality of vector portions may be arranged in a plurality of processor cores including a first processor core comprising the first subset and a second processor core comprising the second subset. In this way, the control logic may be simplified as the threads can be configured to use different cores in the programmable processing unit.

The control logic may be configured to cause a first thread to execute a first vector operation using a given vector portion and a cause a second thread to execute a second vector operation using the given vector portion. The control logic may be configured to schedule the execution of the first and second vector operations, using the given vector portion, at different times.

To facilitate the scheduling of the first and second threads, the control logic may be configured to process the instruction to determine an order of execution for the plurality of threads, and schedule the execution of the first vector operation and the second vector operation using the given vector portion at different times based on the order of execution. Processing the instruction to determine an order of execution enables the programmable processing unit to optimize the use of the plurality of vector portions when executing the instruction. The determined order of execution may be based on the amount of resources needed for each thread, expected execution time, the number of operations to be performed, and data dependencies between vector operations in the instruction. Determining an order of execution in this way enables the controller to optimize the use of the hardware resources while also optimizing computational throughput by ensuring the order of execution is suitable for the handling of any data dependencies in the instructions.

Scheduling the execution of the first and second vector operations may involve time-division multiplexing (TDM). TDM ensures efficient use of data paths in the programmable processing unit while preventing interference or collisions between threads when executing the instruction.

The first vector operation may comprise a first set of procedures and the second vector operations may comprise a second set of procedures. The control logic may be configured to time-division multiplex the execution of the first set of procedures and the second set of procedures using the given vector portion. In this way, the programmable processing unit may interleave low level procedures performed by each thread. For example, the controller may cause one of the threads to load respective input vector data onto a register in a register file, while a second thread is using a different register in that register file to perform an operation using an associated operation unit. At a different time, the first thread may then use the operation unit to perform vector operations while the second thread loads different input vector data to unused registers in the same register file.

The respective input vector data for a given thread may comprise floating point vector data and the vector operation may involve a vector floating point operation. Floating point operation units are large and complex hardware components. By implementing SIMD operations on floating point data in a single thread, the use of these floating point operation units may be optimized. Using the time-division multiplexing techniques when operating on floating point data in this way, the throughput of the programmable processing unit may be optimized without increasing the processor area.

According to a second aspect, there is provided a computer-implemented method of operating a processing unit comprising: providing a plurality of vector portions, each of the plurality of vector portions providing a vector data path and a register for storing vector data, each vector data path comprising a vector operation unit for performing vector operations on vector data; obtaining an instruction involving vector operations; invoking a plurality of threads to execute the instruction, each of the plurality of threads being associated with respective input vector data, wherein at least one of the plurality of threads executes a vector operation on respective input vector data using the plurality of vector portions.

According to a third aspect, there is provided a computer-readable storage medium comprising computer-executable instructions which, when executed in a processor, cause the processor to: provide a plurality of vector portions, each of the plurality of vector portions providing a vector data path and a register for storing vector data, each vector data path comprising a vector operation unit for performing vector operations on vector data; obtain an instruction involving vector operations; invoke a plurality of threads to execute the instruction, each of the plurality of threads being associated with respective input vector data, wherein at least one of the plurality of threads executes a vector operation on respective input vector data using the plurality of vector portions.

According to a fourth aspect, there is provided a programmable processing unit comprising: a plurality of vector portions, each of the plurality of vector portions providing a vector data path and a register for storing packed scalar data, each vector data path comprising a vector operation unit for performing packed scalar operations on packed scalar data; and a controller comprising control logic configured to: obtain a single instruction, multiple thread (SIMT) comprising a plurality of packed single instruction, multiple data (SIMD) instructions; and invoke a plurality of threads to execute the SIMT instruction, wherein each of the plurality of threads is associated with respective packed scalar input data and the control logic configures at least one of the plurality of threads to execute a packed SIMD instruction on respective packed scalar input data using the plurality of vector portions.

Enabling a plurality of packed SIMD instructions to be executed in multiple threads can significantly increase the throughput in programmable processing unit particularly for workloads involving non-native data types.

According to a fifth aspect, there is provided a computer-implemented method of operating a processing unit comprising: providing a plurality of vector portions, each of the plurality of vector portions providing a vector data path and a register for storing packed scalar data, each vector data path comprising an operation unit for performing packed scalar operations on packed scalar data; obtaining a single instruction, multiple thread (SIMT) instruction, the SIMT instruction comprising a plurality of packed single instruction, multiple data (SIMD) instructions each associated with a respective portion of packed scalar data; executing the SIMT instructions using a plurality of threads, executing the SIMT instruction comprising: a first thread of the plurality of threads executing a first packed SIMD instruction on a first portion of packed scalar data using the plurality of vector portions; and a second thread of the plurality of threads executing a second packed SIMD instruction on a second portion of packed scalar data using the plurality of vector portions.

According to a sixth aspect there is provided a computer-readable storage medium comprising computer-executable instructions which, when executed by a processor, cause the processor to provide a plurality of vector portions, each of the plurality of vector portions providing a vector data path and a register for storing packed scalar data, each vector data path comprising an operation unit for performing packed scalar operations on packed scalar data; obtain a single instruction, multiple thread (SIMT) instruction, the SIMT instruction comprising a plurality of packed single instruction, multiple data (SIMD) instructions each associated with a respective portion of packed scalar data; execute the SIMT instructions using a plurality of threads, executing the SIMT instruction comprising: a first thread of the plurality of threads executing a first packed SIMD instruction on a first portion of packed scalar data using the plurality of vector portions; and a second thread of the plurality of threads executing a second packed SIMD instruction on a second portion of packed scalar data using the plurality of vector portions.

Further features and advantages of the invention will become apparent from the following description of preferred embodiments of the invention, given by way of example only, which is made with reference to the accompanying drawings.

### Brief Description of the Drawings

Figure 1 shows a schematic diagram of a programmable processing unit according to examples.
Figure 2 shows a schematic diagram of a method performed by the programmable processing unit according to examples.
Figure 3 shows a schematic diagram of the method performed by the programmable processing unit according to examples in which multiple scalar data values are loaded onto a single register.
Figure 4 shows a schematic diagram of the method in which the programmable processing unit comprises a plurality of processor cores according to examples.
Figure 5 shows a schematic diagram of the method in which a single thread uses a plurality of vector portions in parallel according to examples.
Figure 6 shows a schematic diagram of the method according to examples in which each of a plurality of threads uses a different processor core.
Figure 7 shows a schematic diagram of the method according to examples in which the threads share the plurality of processor cores.
Figure 8 shows a schematic diagram of a vector portion being used two different threads at different times according to examples.
Figure 9 shows a schematic diagram of two threads sharing a plurality of vector portions at different times according to examples.
Figure 10 shows a flow chart of the method according to examples.
Figure 11 shows a schematic diagram of a computer-readable storage medium according to examples.

### Detailed Description

Single instruction, multiple data (SIMD) is a type of parallel computing where a single instruction is executed on multiple data values simultaneously. This allows for more efficient processing, especially for tasks that involve large datasets that can be processed in parallel such as graphics rendering, scientific computing, and digital signal processing. A single instruction involves performing a single operation such as an addition, subtraction, or multiplication.

When adding two arrays of numbers without SIMD, each pair of numbers is added one by one. With SIMD, a single instruction can be used to add multiple pairs of numbers at the same time. For example, where each array comprises fifty numbers, SIMD may be implemented by adding groups of five numbers from each array in a single operation, reducing the total number of clock cycles that are needed to add the two arrays. SIMD implementations may involve a larger control overhead than typical scalar processing. To implement SIMD, a processor may be configured with variants of common instructions, such as LOAD, STORE.

A variant of SIMD, referred to as packed SIMD, involves packing multiple data elements into a single register enabling more efficient use of registers. For example, eight 8-bit data elements can be packed into a single 64-bit register. Each data element in the register is then processed in parallel, using one instruction to operate on all packed data elements at the same time. By packing multiple data elements into a single register more operations can be executed in parallel increasing computational throughput.

Packed SIMD implementations may involve a larger control overhead than other forms of SIMD. To implement packed SIMD, a processor may be configured with packed variants of common instructions, such as arithmetic operations including ADD, SUB, MUL, and DIV. A processor implementing packed SIMD may also perform additional operations to rearrange and align data elements in order to support packed SIMD operations. For example, operations referred to as swizzling, may be used to reorder individual scalar data values stored in a register with other scalar data values as part of a vector. This may be performed to place the scalar data values in an order that is suitable to apply a given vector operation.

Swizzling additionally, or alternatively, involves operations such as duplication, shuffling data between registers, aligning data values for subsequent operations, and masking data values. In matrix and vector arithmetic, swizzling may be used to reorder data for matrix transposition or row/column alignment. In graphics processing, swizzling may be used to rearrange pixel data for blending, transformations, or shading. In signal processing, swizzling may be used to interleave or deinterleave data, such as stereo audio channels or multi-channel signal streams. In cryptography, swizzling may be used to reorder bits or bytes during encryption and decryption. In neural networks, swizzling may e used to prepare input vectors for optimized tensor operations.

Single instruction, multiple threads (SIMT) is a type of parallel computing used primarily in GPUs. SIMT provides high throughput and parallelism making it particularly well suited to certain workloads that involve large-scale parallelism. SIMT differs from SIMD in that SIMT uses multiple threads to execute the single instruction. In the example given above, using SIMT to add the two arrays may involve executing ten threads, each thread configured to perform five addition operations sequentially. SIMT allows for more flexible parallelism than SIMD due to the independence of each thread, allowing for divergence in data and control flow across the threads. While thread divergence can throttle performance in some cases, SIMT is nevertheless desirable when implementing certain workloads such as graphics processing, video coding, and machine learning operations due to the fine grained parallelism and flexibility.

The same processor hardware, including register files and operation units, is generally used to execute operations on different widths of the same fundamental data types. For example, an ALU and a corresponding register may be used to perform operations on both 8-bit integer data elements and 64-bit integer data elements. LOAD operations may include sign and/or zero extension variants to support these smaller data types on the same hardware by extending the size of these smaller data elements by adding additional bits to those data elements when stored in registers.

Workloads such as graphics processing and machine learning may involve processing short data types that are smaller than the architected bit widths of the registers in a processor. Where these workloads are implemented using SIMT it has been found that there are inefficiencies in memory access patterns leading to underutilization of the memory bandwidth, increased register pressure, and suboptimal instruction throughput. All of these factors can limit the maximum compute throughput possible. While architecting smaller registers in a processor may increase the throughput and make more efficient use of registers, this may make those processors less suitable for performing other workloads which operate on larger data types.

Certain examples described herein provide a programmable processing unit that is capable of implementing SIMD instructions within individual threads of a SIMT execution model. An instruction involving a plurality of vector operations may be executed using a plurality of threads, similar to a SIMT execution model. The threads execute the vector operations, or SIMD instructions, to make more efficient use of the registers and memory bandwidth in the processor. This increases the efficiency and compute throughput of the processing unit when implementing workloads that use small data types while maintaining the characteristics of the processing unit that make it capable of performing a wide range of workloads, at least some of which use larger data types.

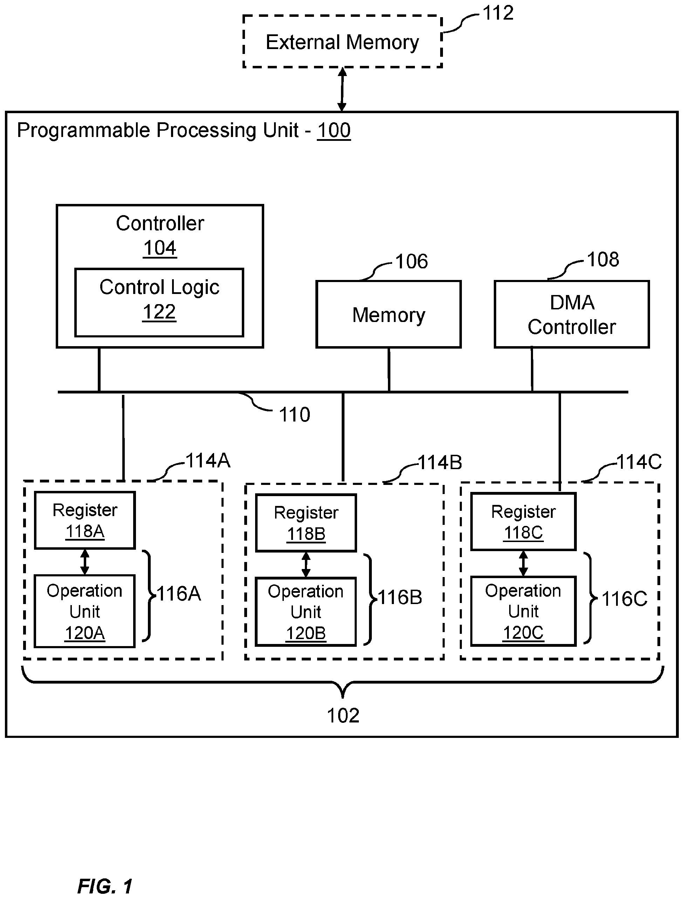

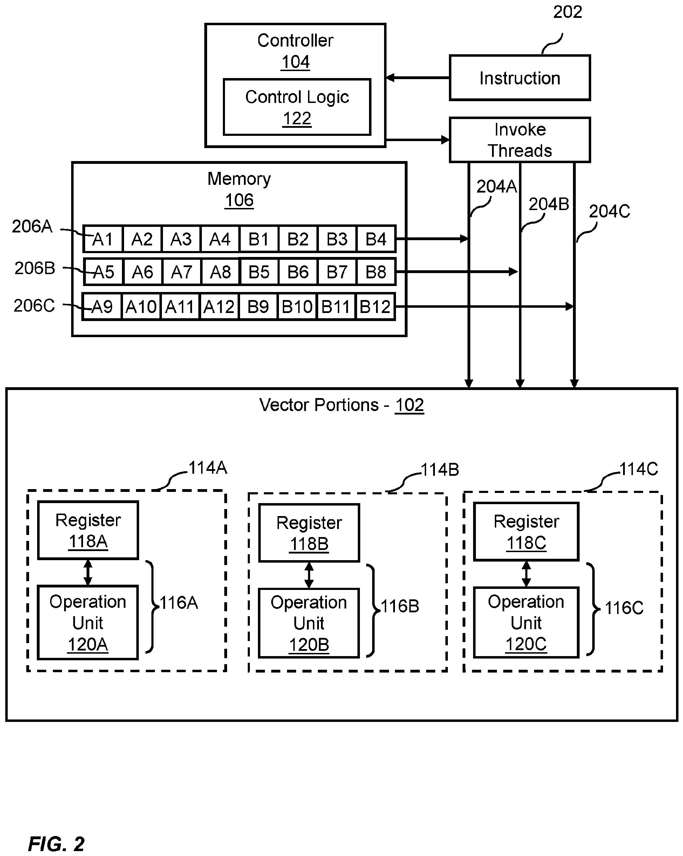

Figure 1 shows a programmable processing unit 100 according to the present disclosure. Figure 1 depicts a general arrangement of the programmable processing unit 100, and further specific examples are depicted in Figures 2 to 7 described later. The systems and methods described herein are applicable to numerous types of processing units, such central processing units (CPUs), graphics processing units (GPUs), digital signal processors (DSPs), application specific integrated circuits (ASICs), integrated circuits in IoT devices, and so forth. The arrangement of the programmable processing unit 100 may be used to process various types of data and workloads including, but not limited to, graphics rendering, image processing, machine learning tasks, and other programs or applications.

The programmable processing unit 100 comprises a plurality of vector portions 102 and a controller 104. In the example shown in Figure 1, the programmable processing unit 100 also comprises a memory 106 and a direct memory access (DMA) controller 108. The vector portions 102, controller 104, memory 106, and DMA controller 108 are connected via a communication network 110, referred to herein as a bus 110, or data bus 110. The memory 106 comprises random access memory (RAM), such as Dynamic RAM (DRAM). The memory 106 is used to store data loaded from sources outside of the processing unit 100, such as external RAM 112 in a computer comprising the programmable processing unit 100, before it is processed using the vector portions 102. The DMA controller 108 is configured to control data transfer between the programmable processing unit 100 and external RAM 112.

Each vector portion 114A to 114C of the plurality of vector portions 102 provides a vector data path 116A to 116C and a register 118A to 118C for storing vector data. The vector data paths 116A to 116C comprise vector operation units 120A to 120C for performing vector operations on vector data. Vector data is a set of multiple data values, or data elements, that are to be processed simultaneously by a single instruction using a SIMD model. Where the vector data comprises a plurality of scalar data elements, the vector data may also be referred to as packed scalar data. Packed scalar data may be stored in an array in memory 106 and when loaded to registers 118A to 118C.

The vector data paths 116A to 116C may also be referred to as vector slices. The vector data paths 116A to 116C may include additional hardware not illustrated in Figure 1 including, for example, memory access units, control logic, and data buses. Only three vector portions 114A to 114C are shown in Figure 1, but it is to be appreciated that the programmable processing unit 100 may comprise many more vector portions. For example, in some cases a programmable processing unit 100 may have up to 32 vector portions per processor core. The number of vector portions provided in the programmable processing unit 100 may be flexible, where the vector portions are logically defined or reconfigurable, for example.

Operation units are generally hardware components designed to execute specific operations, such as arithmetic, logic, or memory access, as part of the execution of an instruction in the programmable processing unit 100. Examples include Arithmetic Logic Units (ALU), Load Store Units (LSU), Branch Resolution Units (BRUs), and Floating Point Units (FPUs) such as Fused Multiply Add units (FMAs). Vector operation units 120A to 120C are examples of operation units that are configured to perform operations on vector data. Configuring a vector operation unit 120A to 120C may involve designing a specific hardware implementation and/or configuring an operation unit with control logic, for example as part of an ISA, to execute vector operations.

The controller 104 comprises control logic 122 that is configured to control the execution of instructions in the programmable processing unit 100 according to a method 200, shown schematically in Figure 2. The programmable processing unit 100 obtains an instruction 202 involving vector operations, such as variants of ADD, MUL, DIV, SUB, LOAD, STORE that are performed on vector data, such as packed scalar data. The instruction 202 may also be referred to as a single instruction, multiple thread (SIMT) instruction. SIMT instructions generally use regular single-thread instruction encoding but are executed across multiple threads. A SIMT instruction involving vector operations, or packed scalar operations, may be a modified version of a SIMT instruction that uses dedicated or specialised instruction encodings that are suitable for implementing vector operations across multiple threads.

Three threads 204A to 204C are invoked to execute the instruction 202, each thread being associated with respective input vector data 206A to 206C. A first thread 204A is associated with first input vector data 206A comprising a plurality of scalar data values A1 to A4 and B1 to B4. A second thread 204B is associated with second input vector data 206B comprising a plurality of scalar data values A5 to A8 and B5 to B8. A third thread 204C is associated with third input vector data 206C comprising a plurality of scalar data values A9 to A12 and B9 to B12. Threads 204A to 204C may be considered the smallest sequence of programmed instructions which are to be managed independently by the controller 104 to execute the instruction 202.

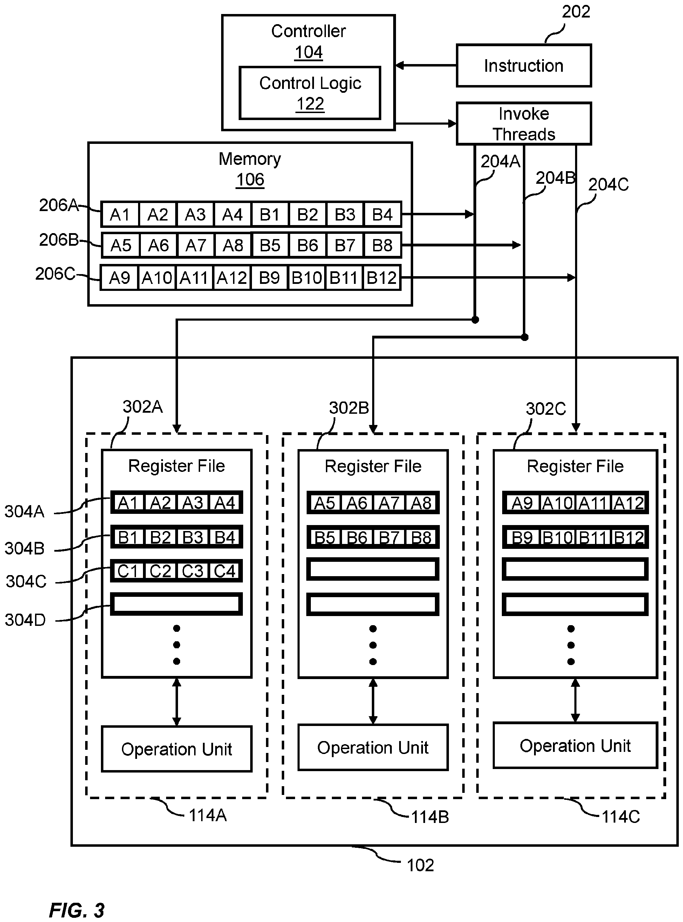

The threads 204A to 204C are used to execute the instruction 202 by executing vector operations on respective input vector data 206A to 206C using the plurality of vector portions 102. The controller 104 schedules and manages the use of the vector portions 102 by the threads 204A to 204C to execute their respective vector operations. As will be discussed further below with respect to Figures 3 to 9, the controller 104 may configure the threads 204A to 204C to use mutually exclusive vector portions 114A to 114C and/or may configure two or more of the threads 204A and 204B to use a common vector portion 114A at different times by controlling the order in which the common vector portion 114A is used.

Figure 3 shows an example in which each vector portion 114A to 114C has a register file 302A to 302C having a plurality of registers 304A to 304D. Only the registers 304A to 304D for a first register file 302A are labelled for simplicity. The first thread 204A is associated with input vector data 206A comprising a first array of scalar data values A1 to A4 and a second array of data values B1 to B4. The scalar data values A1 to A4 and B1 to B4 each have a bit width that is smaller than the bit width of the registers 304A and 304B in a register file 302A. In the example shown, the registers 304A to 304D have a bit width of 64-bit and the scalar data values A1 to A4 and B1 to B4 each have a bit width of 16-bits.

The first thread 204A loads the first array of scalar data values A1 to A4 to a first register 304A and loads the second array of scalar data values B1 to B4 to a second register 304B. In the example shown, these scalar data values are loaded from a memory 106 in the processing unit 100. The first thread 204A then executes a vector ADD operation by adding the first array of scalar data values A1 to A4 to the second array of scalar data values B1 to B4 using the vector operation unit 120A. The resulting array of scalar data values C1 to C4 is stored in a register 304C.

The second thread 204B and the third thread 204C may be configured to perform similar processes to execute their vector operations, though these are not shown in Figure 3 for simplicity.

In this way, the programmable processing unit 100 is able to use threads 204A to 204C of an instruction execution model to perform SIMD operations. This provides more efficient use of registers 304A to 304D for programs involving non-native data types and increases the efficiency of use of the memory bandwidth between the memory 106 and the registers 304A to 304D. Performing vector operations within individual threads in this manner also increases the throughput of the processing unit 100 when implementing instructions 202 which can now involve vector operations on packed scalar data, such as in image processing.

In the example shown in Figure 3, each thread 204A to 204C uses a single vector portion 114A to 114C to perform its respective vector operations. This is due to the relatively small volume of input vector data 206A to 206C to be processed by each thread 204A to 204C. In use, vector operations to be performed by threads 204A to 204C may be more complex and/or may involve processing larger volumes of input vector data 206A to 206C. In that case, the threads 204A to 204C may each use several vector portions, in parallel, to execute their respective vector operations.

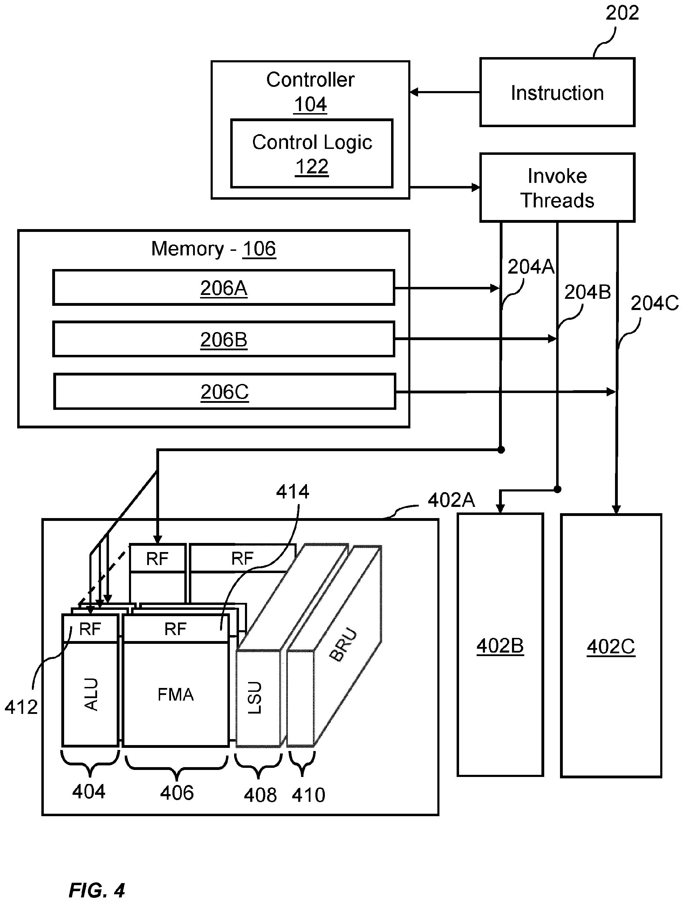

Figure 4 shows a specific example of the programmable processing unit 100 in which a plurality of vector portions are arranged in a plurality of processor cores 402A to 402C, each comprising a subset of the plurality of vector portions 102 in the programmable processing unit 100. Only a first processor core 402A is shown in detail in Figure 4 for simplicity. Each processor core 402A to 402C comprises a subset of the total plurality of vector portions 102. A first processor core 402A comprises a plurality of ALUs 404, configured to perform vector ADD operations, a plurality of FMAs 406 configured to perform vector Fused Multiple Add operations, an LSU 408, and a BRU 410. Each of the ALUs 404 and the FMAs 406 is associated with a corresponding register file 412 and 414 comprising a plurality of registers used to temporarily store vector data while performing vector operations. Only one register 412 for a first ALU, and one register 414 for a first FMA are labelled in Figure 4. The LSU 408 is used to load and store data 206A from the memory 106 to the registers 304A to 304D, and may also be used to store the results of a vector operation to the register 304C.

In the example shown in Figure 4, each of the threads 204A to 204C is configured to use a respective core 402A to 402C to perform its vector operations. For example, the first thread 402A uses a plurality of ALUs 404 in the first core 402A to implement a vector ADD on its respective input vector data 206A. Alternatively, or additionally, the first thread 204A may use a plurality of FMAs 406 to implement vector floating point FMA operations on its respective input vector data 206A.

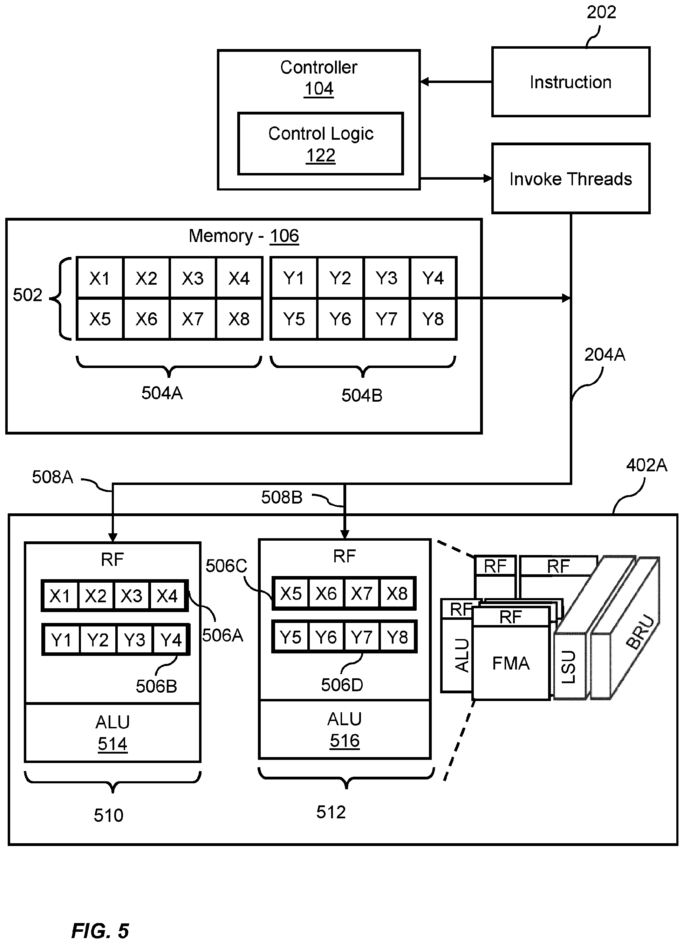

Figure 5 shows the operation of the first thread 204A using the first core 402A where the sum of the data bit widths of the scalar data values 504A to 504B to be processed exceeds a bit width of the registers 506A to 506D. In this example, the first thread 204A is invoked to process input vector data 502 by adding a first array of 16-bit scalar data values 504A to a second array of 16-bit scalar data values 504B. The first array 504A and second array 504B each have eight scalar data values, giving the first and second array 504A and 504B a total bit width of 128-bit each.

The first thread 204A executes a first lane 508A by loading a subset of a first array 504A onto a first register 506A of a first vector portion 510 in the processor core 402A and a subset of the second array 504B onto a second register 506B of the first vector portion 510 in the processor core 402A. A vector ADD operation is executed to add the subset of the first array 504A to the subset of the second array 504B using the ALU 514 of the first vector portion 510. The first thread 204A executes a second lane 508B by loading a different subset of the first array 504A onto a first register 506C of a second vector portion 512 in the processor core 402A and a different subset of the second array 504B onto a second register 506D of the second vector portion 512 in the processor core 402A. A vector ADD operation is then performed to add these subsets of the arrays 504A and 504B using the ALU 516 of the second vector portion 512.

It has been found that configuring multiple threads 204A to 204C to execute SIMD instructions on vector data 206A to 260C can result in an increase in the compute resources used to execute the threads 204A to 204C. To maintain compute throughput, the processor area may be increased, for example, by adding additional registers 506A to 506D and vector operation 510 and 512 units to the processor cores 402A to 402C and/or by increasing the number of processor cores 402A to 402C. This may require designing new and larger processing units 100 which would be more expensive, take up more space, and consume more power.

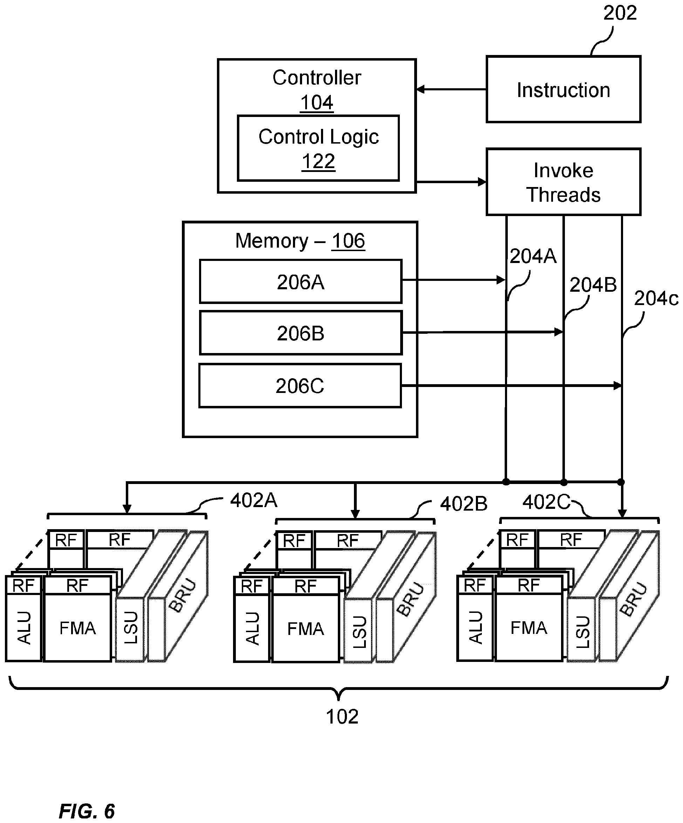

Figure 6 shows an example similar to that shown in Figures 4 and 5 except that the threads 204A to 204C share the plurality of vector portions 102 when executing their respective vector operations. For example, the first thread 204A and the second thread 204B both use one or more vector portions included in the first processor core 402A. The control logic 120 is configured to control an order in which the first thread 204A and the second thread 204B use the common vector portion. By sharing the compute resources of the vector portions 102 across the threads 204A to 204C, it becomes possible for each thread 204A to 204C to execute SIMD instructions without increasing the processor area. While this may come at the expense of more complex control logic 120 and potential stalling for a thread 204A while it waits for its turn to use a shared vector portion, it has been found that this is outweighed by the greater computational throughput and increased memory access efficiency provided by integrating SIMD instructions within individual threads 204A when executing instructions.

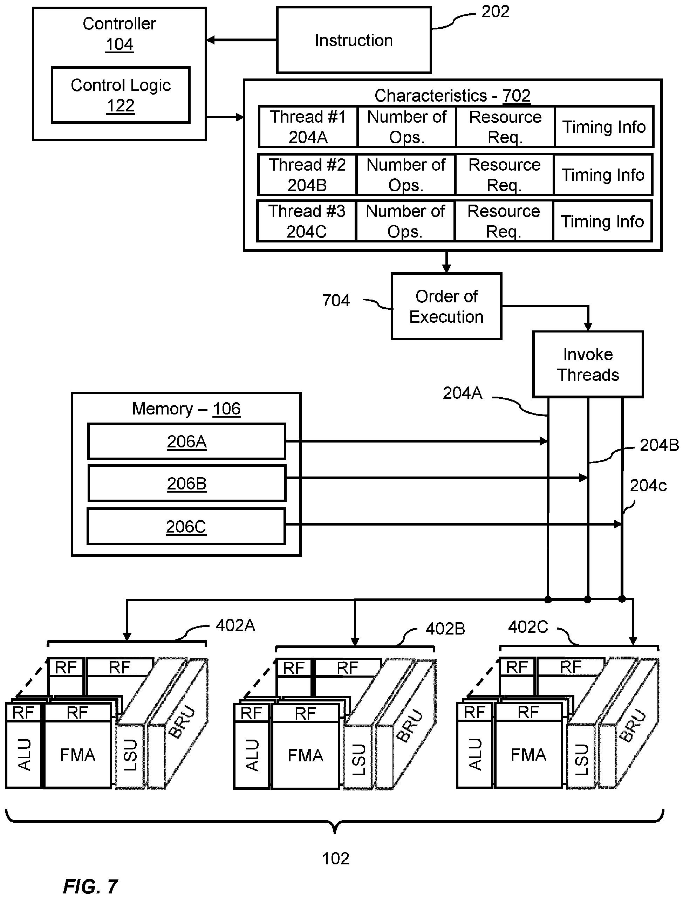

Figure 7 shows an example in which the controller 104 processes the instruction 202, to determine an order of execution 704 for the plurality of the threads 204A to 204C. Processing the instruction 202 involves determining characteristics 702 of each thread 204A to 204B such as how many operations are to be performed, the respective resources needed to execute each thread, and/or expected execution times for the operations expressed in clock cycles. These characteristics 702 may then be processed to determine an order of execution 704 that aims to optimize the memory bandwidth use, compute throughput, and use of the vector portions 102.

The controller 104 then schedules the execution of a first vector operation of the first thread 204A, a second vector operation of the second thread 204B, and a third vector operation of the third thread 204C using the vector portions 102 based on the determined order of execution 704. In some examples, the controller 104 may monitor the execution of the instruction 202 using the threads 204A to 204C and may re-order or reschedule the operations performed by the threads 204A to 204C. In this way, the controller 104 may react to changing conditions in the programmable processing unit 100 to make efficient use of the vector portions 102. For example, additional instructions or workloads may be received and deployed for execution in the programmable processing unit 100. In this case, the controller may schedule the execution of additional instructions while controlling the threads 204A to 204C.

In some examples, the controller 104 implements time division multiplexing (TDM) to control the order in which different threads 204A to 204C share the use of the plurality of vector portions 102. Time division multiplexing is a technique in which the execution of multiple threads 204A to 204C shares a data path and hardware resources, for example a vector portion provided in the processing unit 100. TDM involves dividing time into separate slots, with each thread 204A to 204C being assigned a specific slot for use of the shared vector portion. This ensures efficient use of the vector portion while preventing interference or errors, such as collisions in which multiple threads 204A to 204C attempt to use the same vector portion at the same time.

Implementing TDM in the programmable processing unit 100 to control the execution of the instruction 202 using multiple threads 204A to 204C may involve hybrid distributed TDM. Hybrid distributed TDM combines traditional TDM with distributed processor execution architectures. In hybrid distributed TDM, time slots are allocated across multiple interconnected vector portions. It ensures efficient and time-coordinated use of the plurality of vector portions 102 across the threads 204A to 204C. This is in contrast to typical thread-based parallelisation in which different threads are assigned different resources to execute in parallel. As discussed above, configuring threads 204A to 204C to execute SIMD instructions 202 can result in increased hardware resource usage. By using hybrid distributed TDM to share the plurality of vector portions 102 amongst the threads 204A to 204C, SIMD instructions 202 can be executed without increasing the processor area and while mitigating the effects of bandwidth restrictions in the processing unit 100.

In practice, the processor areas for some operation units are smaller than for others. For example, the processor area for an FMA 406 can be between three and five times as large as the processor area for an ALU 404. Therefore, increasing the number of FMA 406 units to address the increased pressure arising from executing SIMD instructions in threads of a SIMT execution model is particularly undesirable.

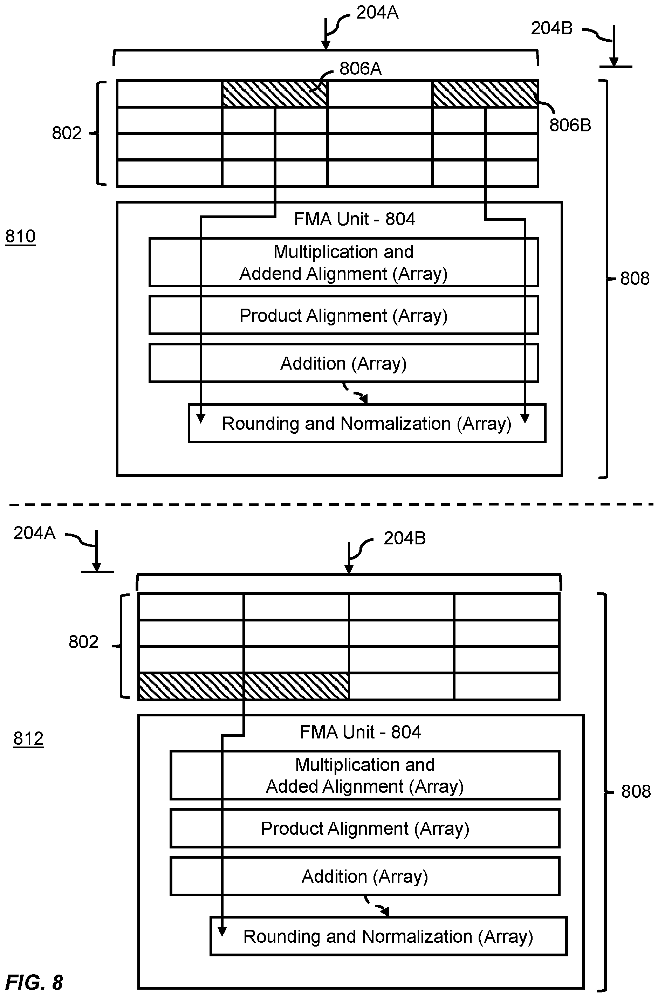

Figure 8 shows an example in which TDM is used to control the use of a vector portion 808 comprising a register file 802 having registers 806A and 806B and an FMA unit 804, configured to perform floating point fused multiply add operations. A fused multiple add operation may be expressed as A x B + C, where A, B, and C are floating point operands. The FMA unit 804 is configured to perform fused multiply add operations using multiple pipeline stages that perform part of the operation. These include a multiplier configured to multiply the mantissa of A and B to generate a carry-save format product. At the same time, the exponent difference d = *exp_{c}* - (*exp_{A} + exp_{B}*) is calculated and addend alignment is performed to align the mantissa of C to the carry-save format product using the difference *d*. Addition is then performed to obtain the result of the FMA operation and finally rounding and normalization is performed.

In the example shown in Figure 8, during a first clock cycle 810, a first thread 204A uses the FMA unit 804 and register file 802 to perform an FMA operation using vector data loaded to the registers 806A and 806B. While the first thread 204A is using the vector portion 808, the second thread 204B is stalled or paused. During a subsequent clock cycle 812, a second thread 204B performs an FMA operation using the same FMA unit 804 and register file 802 using its own vector data. While the second thread 204B is using the vector portion 808 the first thread 204A is stalled or paused.

Implementing packed SIMD execution in threads in this way also enables mixed precision arithmetic to be performed due to the increased flexibility in storing values in the registers in packed or non-packed form and of different bit widths. For example, two single precision 32-bit floating point values may be stored in a single 64-bit register 806A, while a double precision product resulting from the FMA may subsequently be stored in a single 64-bit register 806B.

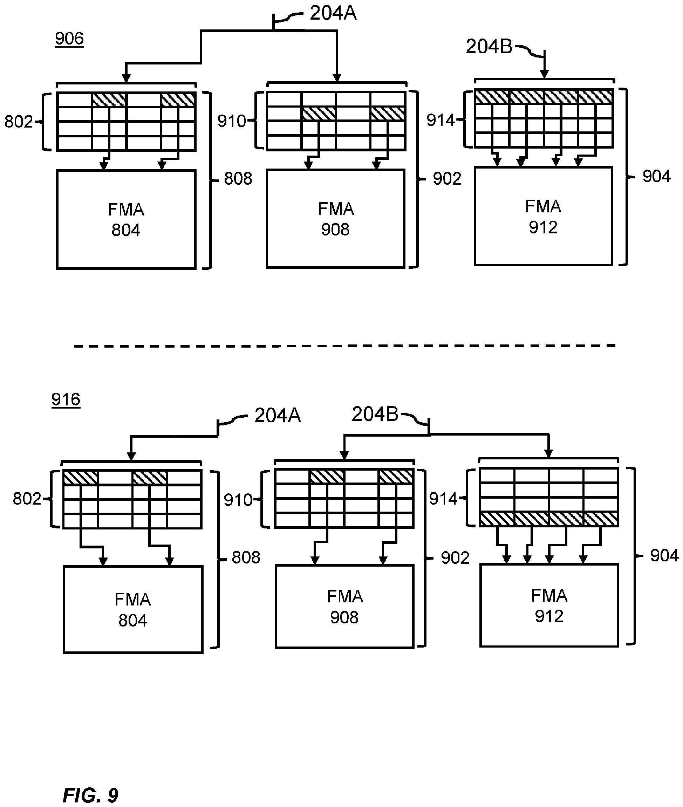

Figure 9 shows an example in which two threads 204A and 204B use multiple vector portions 808, 902 and 904 to execute their respective operations. During a first clock cycle 906, the first thread 204A executes vector operations using a first subset 808 and 902 of the plurality of vector portions 808, 902 and 904, including a first FMA unit and 804 a first register file 802 and a second FMA unit 908 and a second register 910. During the first clock cycle 906, the second thread 204B uses a second, different, subset 912 of the plurality of vector portions 808, 902 and 904 including a third FMA unit 912 and a third register 914.

During a second, subsequent, clock cycle 916 the subset of the plurality of vector portions 808, 902 and 904 used by the first thread 204A changes and the first thread 204A uses the first vector portion 808. The subset of the plurality of vector portions 808, 902, and 904 used by the second thread 204B changes and now includes the second vector portion 902 and the third vector portion 904. In this way, the threads 204A and 204B may share the vector portions 808, 902, and 904 by using different ones of the plurality of vector portions 808, 902, and 904 at different times.

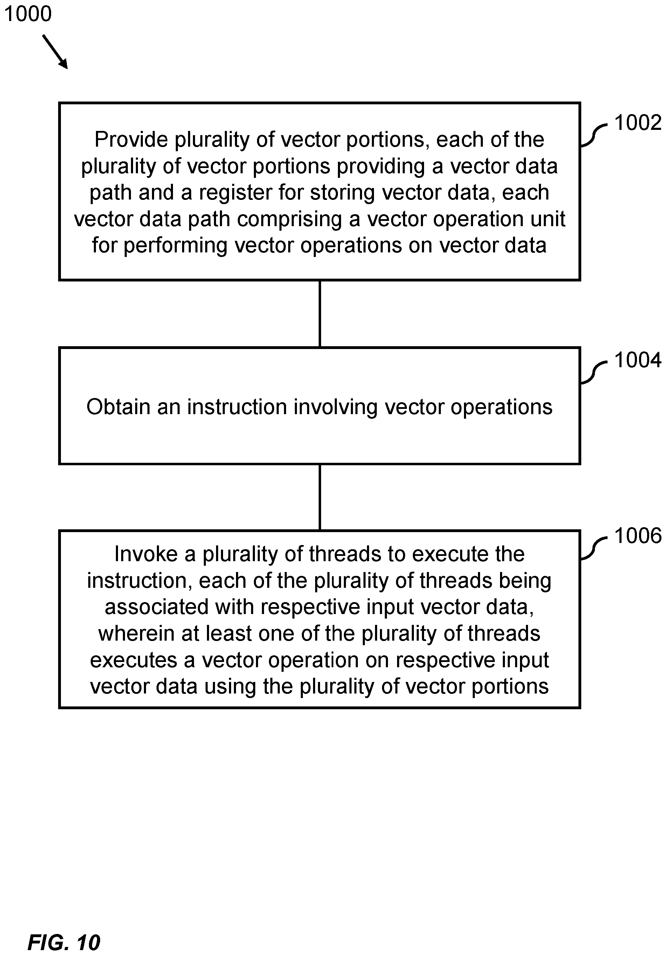

Figure 10 shows a flow diagram of a method 1000 to be performed by the programmable processing unit 100 as described above with respect to Figures 1 to 9. The method 1000 involves providing 1002 a plurality of vector portions 102, obtaining 1004 an instruction 202, and invoking 1006 a plurality of threads to execute the instruction 202. It is to be understood that the variations and examples of additional features described above with respect to Figures 1 to 9 are also applicable to the method 1000 shown in Figure 10.

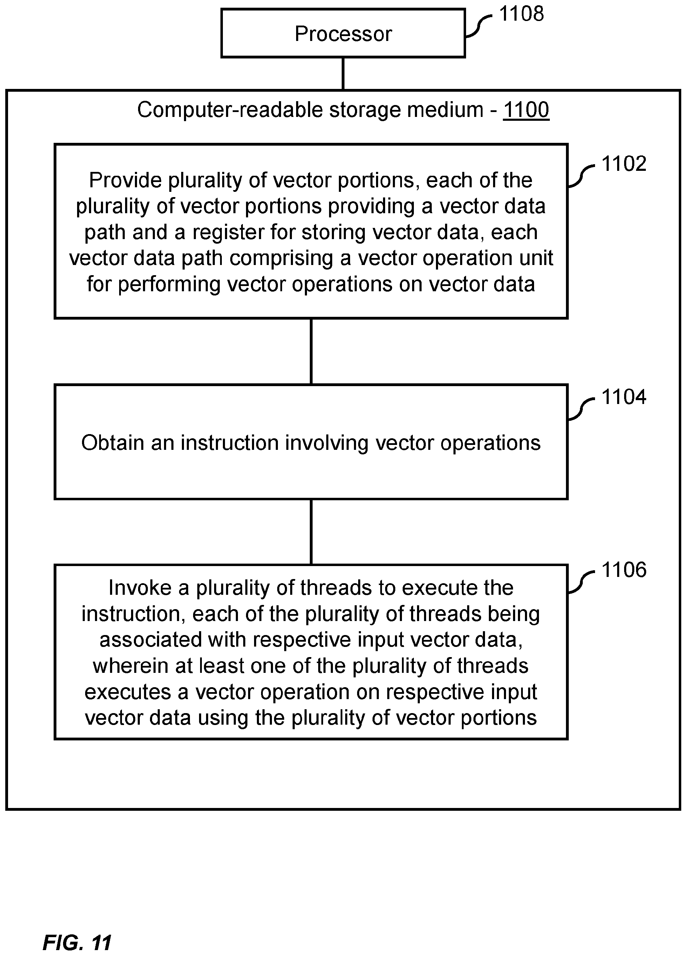

Figure 11 shows a computer-readable storage medium 1100 on which are stored computer-executable instructions 1102 to 1106. When executed by a processor 1108, the instructions 1102 to 1106 cause the processor 1108 to perform the method 1000 shown in Figure 10. The computer-readable storage medium 1100 may be part of control logic integrated in a programmable processing unit 100. In this case, the instructions 1102 to 1106 may be implemented as part of an ISA and/or as part of the underlying control logic defining the microarchitecture of the programmable processing unit 100.

In the examples described above, vector data has been described as scalar vector data. In other examples, the vector data may comprise vector units which are specific vector data types. In this case, the programmable processing unit 100 may be configured to perform packed vector operations on packed vector data. This involves packing multiple vector data elements into a single register and applying packed vector operations to operate on the packed vector data elements simultaneously.

The above embodiments are to be understood as illustrative examples of the invention. Further embodiments of the invention are envisaged. For example, while three threads are shown in the examples described herein, in practice many more threads may be invoked to execute a instruction. The number of threads a programmable processing unit 100 may be capable of invoking will vary depending on the underlying architecture and size of the processing unit 100. For consumer devices, such as consumer laptops, 8 threads may be used. Where the programmable processing unit 100 is implemented as a GPU as many as 192 threads may be used. In applications such as servers or professional computers used in industry as many as 18432 threads may be used. It is also to be appreciated that as computer technology develops the number of threads that a single processing unit 100 can implement may increase beyond these values.

The examples provided herein have been described in relation to ALU and FMA units, but it will be appreciated that the techniques may be applied to a variety of alternative, or additional, operation units in a programmable processing unit. While specific examples of register bit widths and data bit widths are described herein, the programmable processing unit may be configured to process a variety of additional data widths. For example, the techniques described herein may be applied to 4-bit, 8-bit, 18-bit, 32-bit, and 64-bit data types including integer, floating point, and vector units. The register bit widths may also vary depending on the architecture of the programmable processing unit.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A programmable processing unit (100) comprising:
a plurality of vector portions (102), each of the plurality of vector portions (102) providing a vector data path (116A to 116C) and a register (118A to 118C) for storing vector data (206A to 206C), each vector data path (116A to 116C) comprising a vector operation unit (120A to 120C) for performing vector operations on vector data; and
a controller (104) comprising control logic (122) configured to:
obtain an instruction (202) involving vector operations; and
invoke a plurality of threads (204A to 204C) to execute the instruction (202),
wherein each of the plurality of threads (204A to 204C) is associated with respective input vector data (206A to 206C) and the control logic (122) configures at least one of the plurality of threads (204A) to execute a vector operation on respective input vector data (206A) using the plurality of vector portions (102).

2. The programmable processing unit according to claim 1, wherein the respective input vector data associated with a given thread comprises packed scalar data.

3. The programmable processing unit according to claim 1 or claim 2, wherein two or more threads of the plurality of threads are configured to use a common vector portion of the plurality of vector portions, and wherein the control logic is configured to control an order in which the two or more threads use the common vector portion.

4. The programmable processing unit according to any preceding claim, wherein a first register (304A) of a first vector portion (114A) comprises a first register bit width, and respective input vector data (206A) for a given thread (204A) comprises a plurality of scalar data values (A1 to A4), each of the plurality of scalar data values having a data bit width that is smaller than the first register bit width, and wherein the control logic is configured to cause the given thread to:
load two or more scalar data values (A1 to A4) of the respective input vector data onto the first register; and
execute the vector operation on the two or more scalar data values using a first vector operation unit (120A) of the first vector portion.

5. The programmable processing unit according to claim 4, wherein a sum of the data bit widths of each of the plurality of scalar data values is larger than the first register bit width, and wherein the given thread is configured to:
execute a first lane (508A) by:
loading a first set of two or more scalar data values (X1 to X4) of the respective input vector data (502) onto the first register (506A) of the first vector portion (510); and
executing the vector operation on the first set of two or more scalar data values (X1 to X4) using a first vector operation unit (514) of the first vector portion (510); and
execute a second lane (508B) by:
loading a second set of two or more scalar data values (X5 to X8) of the respective input vector data (502) onto a second register (506C) of a second vector portion (512); and
executing the vector operation on the second set of two or more scalar data values (X5 to X8) using a second vector operation unit (516) of the second vector portion (512).

6. The programmable processing unit according to any preceding claim, wherein a first thread of the plurality of threads executes a first vector operation using a first subset of the plurality of vector portions and a second thread of the plurality of threads executes a second vector operation using a second subset of the plurality of vector portions, and wherein the first subset and the second subset are different.

7. The programmable processing unit according to claim 6, wherein the plurality of vector portions are arranged in a plurality of processor cores (402A to 402C), including:
a first processor core (402A) comprising the first subset of the plurality of vector portions; and
a second processor core (402B) comprising the second subset of the plurality of vector portions.

8. The programmable processing unit according to any one of claims 1 to 5, wherein the control logic is configured to:
cause a first thread of the plurality of threads to execute a first vector operation using a given vector portion of the plurality of vector portions; and
cause a second thread of the plurality of threads to execute a second vector operation using the given portion of the plurality of vector portions.

9. The programmable processing unit according to claim 8, wherein the control logic is configured to schedule the execution of the first vector operation and the execution of the second vector operation using the given vector portion at different times.

10. The programmable processing unit according to claim 9, wherein the control logic is configured to:
process the instruction to determine an order of execution (704) for the plurality of threads; and
schedule the execution of the first vector operation and the second vector operation using the given vector portion at different times based on the order of execution.

11. The programmable processing unit according to claim 10, wherein scheduling the execution of the first vector operation and the second vector operation comprises time-division multiplexing, TDM.

12. The programmable processing unit according to claim 10 or claim 11, wherein the first vector operation comprises a first set of procedures and the second vector operation comprises a second set of procedures and wherein the control logic is configured to time-division multiplex the execution of the first set of procedures and the second set of procedures using the given vector portion.

13. The programmable processing unit according to any preceding claim, wherein the respective input vector data for a given thread comprises floating point vector data and the vector operation involves a vector floating point operation.

14. A computer-implemented method (1000) of operating a processing unit (100) comprising:
providing (1002) a plurality of vector portions (102), each of the plurality of vector portions providing a vector data path (116A to 116C) and a register (118A to 118C) for storing vector data (206A to 206C), each vector data path (116A to 116C) comprising a vector operation unit (120A to 120C) for performing vector operations on vector data;
obtaining (1004) an instruction (202) involving vector operations;
invoking (1006) a plurality of threads (204A to 204C) to execute the instruction (202), each of the plurality of threads (204A to 204C) being associated with respective input vector data (206A to 206C),
wherein at least one of the plurality of threads (204A) executes a vector operation on respective input vector data (206A) using the plurality of vector portions (102).

15. A computer-readable storage medium (1100) comprising computer-executable instructions (1102 to 1106) which, when executed in a processor (1106), cause the processor to:
provide a plurality of vector portions (102), each of the plurality of vector portions providing a vector data path (116A to 116C) and a register (118A to 118C) for storing vector data (206A to 206C), each vector data path (116A to 116C) comprising a vector operation unit (120A to 120C) for performing vector operations on vector data;
obtain an instruction (202) involving vector operations;
invoke a plurality of threads (204A to 204C) to execute the instruction (202), each of the plurality of threads (204A to 204C) being associated with respective input vector data (206A to 206C),
wherein at least one of the plurality of threads (204A) executes a vector operation on respective input vector data (206A) using the plurality of vector portions (102).
